# FASCICULE DE BREVET EUROPEEN

(11) **EP 3 830 741 B1**
(45) Date de publication et mention de la délivrance du brevet: **16.08.2023**
(21) Numéro de dépôt: 19745149.5
(22) Date de dépôt: 30.07.2019
(51) Int. Cl.: G06V 20/56

(54) **ASSISTANCE À LA CONDUITE POUR LE CONTROLE D'UN VEHICULE AUTOMOBILE COMPRENANT DES ÉTAPPES PARALLÈLES DE TRAITEMENT DES IMAGES TRANSFORMÉES.**
FAHRUNTERSTÜTZUNG ZUR STEUERUNG EINES KRAFTFAHRZEUGS MIT PARALLELEN VERARBEITUNGSSCHRITTEN TRANSFORMIERTER BILDER
DRIVING ASSISTANCE FOR CONTROL OF A MOTOR VEHICLE INCLUDING PARALLEL PROCESSING STEPS OF TRANSFORMED IMAGES

(30) Priorité: 31.07.2018 FR 1857180
(43) Date de publication de la demande: 09.06.2021
(73) Titulaire: Valeo Schalter und Sensoren GmbH, 74321 Bietigheim-Bissingen (DE)
(72) Inventeur: BUHET, Thibault, 94046 Creteil CEDEX (FR); GEORGE, Laurent, 94046 Creteil CEDEX (FR)
(74) Mandataire: Claassen, Maarten Pieter
(86) Numéro de dépôt international: PCT/EP2019/070447
(87) Numéro de publication internationale: WO 2020/025590

(56) Documents cités:
- WO-A1-2016/012524
- US-A1- 2017 369 057
- Mariusz Bojarski ET AL: "End to End Learning for Self-Driving Cars", , 25 avril 2016 (2016-04-25), XP055570062, Extrait de l'Internet: URL:https://images.nvidia.com/content/tegr a/automotive/images/2016/solutions/pdf/end -to-end-dl-using-px.pdf [extrait le 2019-06-03]

## Description

La présente invention concerne de manière générale les véhicules automobiles, et plus précisément un procédé et un système d'assistance à la conduite pour le contrôle longitudinal et/ou latéral d'un véhicule automobile.

De nombreux systèmes d'assistance à la conduite sont aujourd'hui proposés dans le but d'améliorer les conditions de sécurité de circulation.

Parmi les fonctionnalités possibles, on peut citer notamment la régulation de vitesse ou ACC (initiales anglo-saxonnes mises pour Adaptive Cruise Control), l'arrêt et le redémarrage automatique du moteur du véhicule en fonction des conditions de trafic et/ou des signalisations (feux, stop, céder le passage...), l'assistance au maintien automatique de la trajectoire du véhicule dans sa voie de roulage comme proposée par les systèmes connus sous la terminologie anglo-saxonne de « Lane Keeping Assistance Systems, l'avertissement au conducteur de sortie de voie ou de franchissement involontaire de lignes (« Lane Departure Warning » en terminologie anglo-saxonne), l'assistance au changement de voie ou LCC (initiales anglo-saxonnes mises pour Lane Change Control), etc.

Les systèmes d'assistance à la conduite ont ainsi pour fonction générale d'alerter le conducteur d'une situation requérant sa vigilance et/ou de définir la trajectoire que doit suivre le véhicule pour arriver à une destination donnée, et permettre par suite de contrôler les organes de contrôle de la direction et/ou de freinage et d'accélération du véhicule, pour que cette trajectoire soit effectivement suivie automatiquement. La trajectoire doit être comprise ici dans sa définition mathématique, c'est-à-dire comme étant l'ensemble des positions successives qui doivent être occupées par le véhicule au cours du temps. Ainsi, les systèmes d'assistance à la conduite doivent définir non seulement le chemin à emprunter, mais aussi le profil de vitesses (ou accélérations) à respecter. Pour ce faire, ils utilisent de nombreuses informations sur l'environnement immédiat du véhicule (présence d'obstacles tels que des piétons, de cycles ou autres véhicules motorisés, détection de panneaux de signalisation, configuration routière...), en provenance d'un ou plusieurs moyens de détection tels que caméras, radars, lidars, équipant le véhicule, ainsi que des informations liées au véhicule lui-même, telles que sa vitesse, son accélération, sa position donnée par exemple par un système de navigation type GPS.

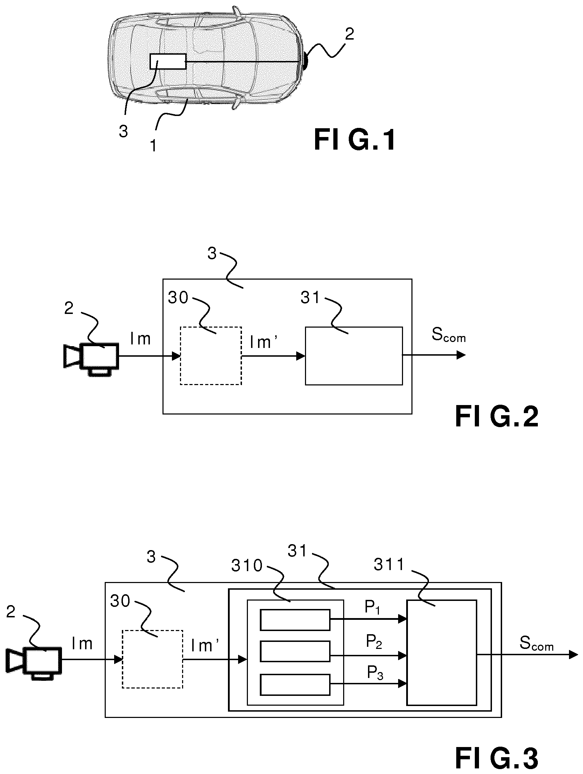

On s'intéresse par la suite plus particulièrement aux systèmes d'assistance à la conduite pour le contrôle longitudinal et/ou latéral d'un véhicule automobile à partir du seul traitement des images capturées par une caméra embarquée sur le véhicule automobile. La figure 1 illustre schématiquement, en vue de dessus, un véhicule automobile 1 muni d'une caméra numérique 2, placée ici à l'avant du véhicule, et d'un système 3 d'assistance à la conduite recevant en entrée les images capturées par la caméra 2.

Certains de ces systèmes implémentent des algorithmes de vision de différentes natures (traitement de pixels, reconnaissance d'objets par apprentissage automatique, flux ou flot optique), dans le but de détecter des obstacles ou plus généralement des objets dans l'environnement immédiat du véhicule, d'estimer une distance séparant le véhicule des obstacles détectés, et de commander en conséquence les organes du véhicule tels que le volant ou colonne de direction, les organes de freinage et/ou l'accélérateur. Ces systèmes ne permettent de reconnaître qu'un nombre limité d'objets (par exemple des piétons, des cyclistes, d'autres voitures, des panneaux de signalisation, des animaux,...), définis à l'avance.

D'autres systèmes utilisent l'intelligence artificielle et s'attachent à tenter d'imiter le comportement humain face à une scène routière complexe. On connaît notamment du document intitulé « End to End Learning for Self-Driving Cars » (M. Bojarski et al., 25/04/2016, https://arxiv.org/abs/1604.07316) un réseau de neurones convolutif ou CNN (initiales anglo-saxonnes mises pour « Convolutional Neural Network »), lequel réseau, une fois entraîné lors d'un processus d'apprentissage « hors-ligne », peut générer une consigne de direction à partir de l'image vidéo fournie par une caméra. Le document US2017/369057 divulgue un système de conduite autonome utilisant plusieurs caméras et transformant les images pour les utiliser dans un réseau neuronal pour un système d'assistance au conducteur de voiture. Le document WO2016/012524 divulgue la fusion d'informations provenant de différentes caméras pour détecter, par exemple, des feux de signalisation.

Le fonctionnement « en ligne » d'un système 3 connu de ce type est schématisé sur la figure 2. Le système 3 comporte un réseau de neurones 31, par exemple un réseau de neurones profond ou DNN (initiales anglo-saxonnes mises pour « Deep Neural Network »), et optionnellement un module 30 de redimensionnement des images permettant de générer une image Im' d'entrée pour le réseau de neurones dont les dimensions sont compatibles avec le réseau, à partir d'une image Im fournie par une caméra 2. Le réseau de neurones formant le dispositif 31 de traitement d'images a été entraîné au préalable et configuré pour générer en sortie une consigne S_{com} de contrôle, par exemple une vitesse ou une accélération (positive ou négative) de consigne pour le véhicule lorsque l'on souhaite exercer un contrôle longitudinal du véhicule automobile, ou un angle de consigne de direction du volant lorsque l'on souhaite exercer un contrôle latéral du véhicule, voire une combinaison de ces deux types de consignes si l'on souhaite exercer un contrôle longitudinal et latéral.

Dans une autre implémentation connue d'un système d'assistance à la conduite à intelligence artificielle, schématisée sur la figure 3, l'image Im capturée par la caméra 2, éventuellement redimensionnée en une image Im', est traitée en parallèle par une pluralité de réseaux de neurones dans un module 310, chacun des réseaux ayant été entraîné pour une tâche spécifique. Sur la figure 3, trois réseaux de neurones ont été représentés, générant chacun une consigne P₁, P₂ ou P₃ pour le contrôle longitudinal et/ou latéral du véhicule, à partir d'une même image d'entrée Im'. Les consignes sont ensuite fusionnées dans un module numérique 311 de façon à délivrer une consigne résultante S_{com} de contrôle longitudinal et/ou latéral.

Dans les deux cas, les réseaux de neurones ont été entraînés à partir d'une grande quantité d'enregistrements images correspondant à des situations de conduites réelles de différents véhicules par différents humains, et ont ainsi appris à reconnaître une scène et à générer une consigne de contrôle proche du comportement humain.

L'intérêt des systèmes à intelligence artificielle tels que les réseaux de neurones précédemment décrits réside dans le fait que ces systèmes vont pouvoir appréhender simultanément un grand nombre de paramètres dans une scène routière (par exemple une baisse de luminosité, la présence de plusieurs obstacles de plusieurs natures, la présence d'une voiture qui précède le véhicule et dont les feux arrière sont allumés, des lignes de marquage sur la route qui s'incurvent, et/ou qui s'effacent...) et réagir comme le ferait un conducteur humain. A la différence néanmoins des systèmes à détection d'objets, les systèmes à intelligence artificielle ne font pas nécessairement de classification ni de détection d'objets, et n'estiment donc pas nécessairement une information de distance séparant le véhicule d'un potentiel danger.

Or, en condition d'utilisation, il peut arriver que la consigne de contrôle ne soit pas suffisamment réactive, ce qui peut créer des situations de dangers. Par exemple, le système 3 décrit aux figures 2 et 3 pourra dans certains cas ne pas anticiper suffisamment la présence d'un autre véhicule à l'avant du véhicule 1, ce qui peut par exemple entraîner un freinage tardif.

Une première solution possible serait de combiner la consigne S_{com} avec une information de distance qui proviendrait d'un autre capteur embarqué sur le véhicule (par exemple un lidar ou un radar...). Cette solution est cependant coûteuse.

Une autre solution serait de modifier les algorithmes implémentés dans le ou les réseaux de neurones du dispositif 31. Ici encore, la solution est coûteuse. De plus, il n'est pas toujours possible d'intervenir sur le contenu de ce dispositif 31.

En outre, si les solutions précédentes permettent de gérer les possibles erreurs du réseau dans l'appréciation de la situation, aucune ne permet d'anticiper les temps de calcul des algorithmes ou de modifier le comportement du véhicule pour qu'il adopte un style de conduite particulier, tel qu'une conduite sécurisée, ou une conduite plus agressive.

La présente invention a pour but de pallier les limitations des systèmes précédents en proposant une solution simple et peu coûteuse qui permette d'améliorer la réactivité de l'algorithme implémenté par le dispositif 31 sans avoir à modifier son processus de traitement interne.

Pour ce faire, un premier objet de l'invention est un procédé d'assistance à la conduite pour le contrôle longitudinal et/ou latéral d'un véhicule automobile, le procédé comportant une étape de traitement d'une image capturée par une caméra numérique embarquée sur ledit véhicule automobile suivant un algorithme de traitement ayant été entraîné au préalable selon un algorithme d'apprentissage, de manière à générer une consigne de contrôle longitudinal et/ou latéral du véhicule automobile, le procédé étant caractérisé en ce qu'il comprend en outre :
- au moins une étape de traitement additionnel, en parallèle de ladite étape de traitement de l'image, d'au moins une image additionnelle suivant ledit algorithme de traitement, de manière à générer au moins une consigne additionnelle de contrôle longitudinal et/ou latéral du véhicule automobile, ladite au moins une image additionnelle résultant d'au moins une transformation géométrique effectuée sur ladite image capturée, et
- la génération d'une consigne résultante de contrôle longitudinal et/ou latéral fonction de ladite consigne de contrôle longitudinal et/ou latéral et de ladite au moins une consigne additionnelle de contrôle longitudinal et/ou latéral.

Selon l'invention, ladite au moins une transformation géométrique comprend un zoom grossissant une zone d'intérêt de ladite image capturée.

Selon d'autres implémentations possibles, ladite au moins une transformation géométrique et/ou radiométrique comprend une rotation, ou une modification de la luminosité, ou un rognage de ladite image capturée ou d'une zone d'intérêt de ladite image capturée.

Dans une implémentation possible, ladite consigne de contrôle longitudinal et/ou latéral et ladite au moins une consigne additionnelle de contrôle longitudinal et/ou latéral comportent une information relative à un angle de direction de consigne du volant du véhicule automobile.

En variante ou en combinaison, ladite consigne de contrôle longitudinal et/ou latéral et ladite au moins une consigne additionnelle de contrôle longitudinal et/ou latéral comportent une information relative à une vitesse de consigne et/ou une accélération de consigne.

Ladite consigne résultante de contrôle longitudinal et/ou latéral peut être générée par calcul d'une moyenne de ladite consigne de contrôle longitudinal et/ou latéral et ladite au moins une consigne additionnelle de contrôle longitudinal et/ou latéral. En variante, ladite consigne résultante de contrôle longitudinal et/ou latéral peut correspondre à une valeur minimum entre une vitesse de consigne relative à ladite consigne de contrôle longitudinal et/ou latéral et une vitesse de consigne additionnelle relative à ladite au moins une consigne additionnelle de contrôle longitudinal et/ou latéral.

Un deuxième objet de la présente invention est un système d'assistance à la conduite pour le contrôle longitudinal et/ou latéral d'un véhicule automobile, le système comportant un dispositif de traitement d'images destiné à être embarqué sur le véhicule automobile, ledit dispositif de traitement d'images ayant été entraîné au préalable selon un algorithme d'apprentissage et étant configuré pour générer en sortie une consigne de contrôle longitudinal et/ou latéral du véhicule automobile à partir d'une image capturée par une caméra numérique embarquée et fournie en entrée, le système étant caractérisé en ce qu'il comprend en outre :
- au moins un dispositif additionnel de traitement d'images identique audit dispositif de traitement d'images ;
- un module numérique de traitement d'images configuré pour fournir au moins une image additionnelle en entrée dudit dispositif additionnel de traitement d'images pour un traitement en parallèle de l'image capturée par la caméra et de ladite au moins une image additionnelle, de manière à ce que ledit dispositif additionnel de traitement d'images génère au moins une consigne additionnelle de contrôle longitudinal et/ou latéral du véhicule automobile, ladite au moins une image additionnelle résultant d'au moins une transformation géométrique effectuée sur ladite image, et
- un module numérique de fusion configuré pour générer une consigne résultante de contrôle longitudinal et/ou latéral fonction de ladite consigne de contrôle longitudinal et/ou latéral et de ladite au moins une consigne additionnelle de contrôle longitudinal et/ou latéral. Selon l'invention, la transformation géométrique comprend un zoom grossissant une zone d'intérêt de ladite image capturée.

L'invention sera mieux comprise à la lecture de la description qui suit, faite en référence aux figures annexées, dans lesquelles :
- la figure 1, déjà décrite ci-avant, illustre sous forme simplifiée une architecture commune aux systèmes d'assistance à la conduite embarqué sur un véhicule implémentant un traitement d'images issues d'une caméra embarquée;
- la figure 2, déjà décrite ci-avant, est un synoptique simplifié d'un système connu pour le contrôle longitudinal et/ou latéral d'un véhicule automobile, utilisant un réseau de neurones
- la figure 3, déjà décrite ci-avant, est une variante connue du système de la figure 2 ;
- la figure 4 représente, sous forme de synoptique simplifié, un mode de réalisation possible d'un système d'assistance à la conduite conforme à l'invention ;
- les figures 5 et 6 illustrent des principes appliqués par le système de la figure 4 sur deux exemples de situation routière.

Dans la suite de la description, et à moins qu'il n'en soit disposé autrement, les éléments communs à l'ensemble des figures portent les mêmes références.

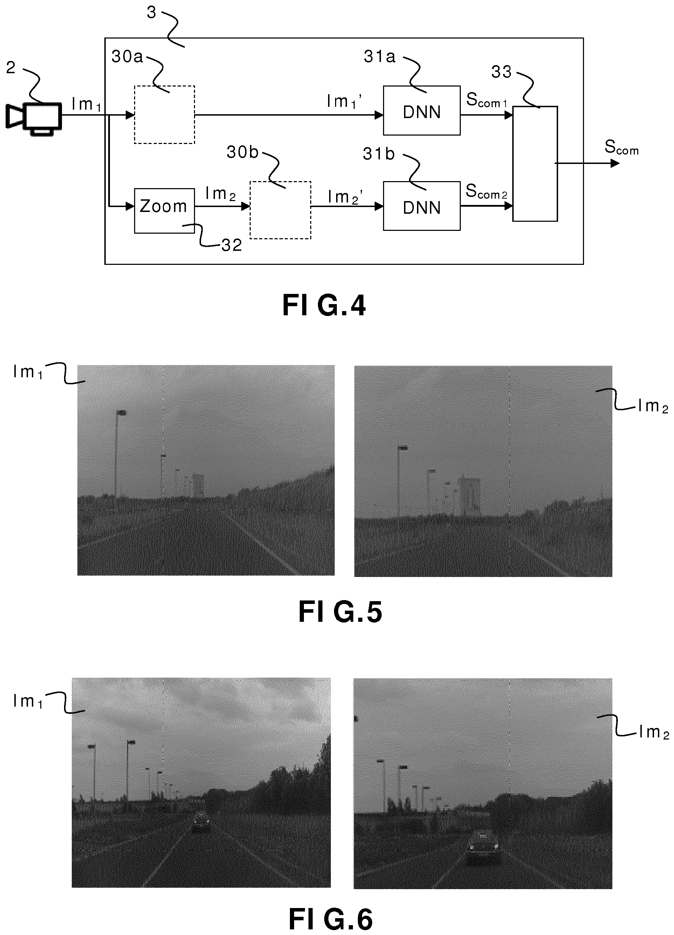

Un système d'assistance à la conduite conforme à l'invention va être décrit en référence à la figure 4, dans le cadre du contrôle longitudinal d'un véhicule automobile. L'invention n'est cependant pas limitée à cet exemple, et peut notamment être utilisée pour permettre le contrôle latéral d'un véhicule automobile, ou pour permettre le contrôle à la fois longitudinal et latéral d'un véhicule automobile. Sur la figure 4, le système 3 d'assistance au contrôle longitudinal comporte, comme décrit dans le cadre de l'art antérieur, un dispositif 31a de traitement d'images embarqué sur le véhicule automobile, recevant en entrée une image Im₁ capturée par une caméra 2 numérique également embarquée sur le véhicule automobile. Le dispositif 31a de traitement d'images a été entraîné au préalable selon un algorithme d'apprentissage et configuré pour générer en sortie une consigne S_{com1} de contrôle longitudinal, par exemple une valeur de vitesse de consigne ou une d'accélération de consigne, adaptée à la situation représentée sur l'image Im₁. Le dispositif 31a peut être le dispositif 31 décrit en référence à la figure 2, ou le dispositif 31 décrit en référence à la figure 3. Si nécessaire, le système comporte un module 30a de redimensionnement configuré pour redimensionner l'image Im₁ en une image Im₁' compatible avec la taille d'image que le dispositif 31a est apte à traiter.

Le dispositif 31a de traitement d'images comporte par exemple un réseau neuronal profond.

Le dispositif 31a de traitement d'images est considéré ici comme une boîte noire, en ce sens que l'invention propose d'améliorer la réactivité de l'algorithme qu'il implémente sans intervenir sur son fonctionnement interne.

L'invention prévoit pour cela de faire en parallèle du traitement fait par le dispositif 31a, au moins un traitement additionnel utilisant le même algorithme que celui implémenté par le dispositif 31a, sur une image additionnelle élaborée à partir de l'image Im₁.

Pour ce faire, conformément à un mode de réalisation possible de l'invention, le système 3 comporte un module numérique 32 de traitement d'images configuré pour fournir au moins une image additionnelle Im₂ en entrée d'un dispositif 31b additionnel de traitement d'images, identique au dispositif 31a et implémentant en conséquence le même algorithme de traitement, cette image additionnelle Im₂ résultant d'au moins une transformation géométrique et/ou radiométrique effectuée sur l'image Im₁ initialement capturée par la caméra 2. Ici encore, le système 3 peut comporter un module de redimensionnement 30b similaire au module de redimensionnement 30a, pour fournir une image Im₂' compatible avec l'entrée du dispositif 31b additionnel.

Comme illustré à titre d'exemple non limitatif sur la figure 4, le module numérique 32 est configuré pour réaliser un zoom grossissant une zone d'intérêt de l'image Im₁ capturée par la caméra 2, par exemple une zone centrale de l'image Im₁. Les figures 5 et 6 donnent deux exemples d'images transformées Im₂ résultant d'un zoom grossissant le centre d'une image Im₁ capturée par une caméra embarquée à l'avant d'un véhicule. Dans le cas de la figure 5, la scène routière à l'avant du véhicule, représentée sur l'image Im₁, montre une route droite totalement dégagée à l'avant du véhicule. De manière différente, l'image Im₁ de la figure 6 montre la présence, à l'avant du véhicule, d'un véhicule tiers dont les feux arrière stop sont allumés. Pour les deux figures 5 et 6, l'image Im₂ est un zoom grossissant la zone centrale de l'image Im₁. Dans le cas de la présence d'un danger (situation de la figure 6), le zoom grossissant donne l'impression que le véhicule tiers est beaucoup plus près qu'il ne l'est dans la réalité.

Le système 3 conforme à l'invention va ainsi pouvoir opérer au moins deux traitements parallèles, à savoir :
- un premier traitement de l'image capturée Im₁ (éventuellement de l'image redimensionnée Im₁') par le dispositif 31a, lui permettant de générer une consigne S_{com1} de contrôle ;
- au moins un deuxième traitement de l'image additionnelle Im₂ (éventuellement de l'image additionnelle redimensionnée Im₂') par le dispositif additionnel 31b lui permettant de générer une consigne additionnelle S_{com2} de contrôle, possiblement distincte de la consigne S_{com1}.

La consigne S_{com1} et la consigne additionnelle S_{com2} sont de même nature, et comportent par exemple chacune une information relative à une vitesse de consigne à adopter par le véhicule automobile équipé du système 3. En variante, les deux consignes S_{com1} et S_{com2} peuvent comporter chacune une accélération de consigne, de valeur positive lorsque le véhicule doit accélérer, ou de valeur négative lorsque le véhicule doit ralentir.

Dans d'autres modes de réalisation pour lesquels le système 3 doit permettre une assistance à la conduite avec un contrôle latéral du véhicule automobile, les deux consignes S_{com1} et S_{com2} comporteront chacune une information relative de préférence à un angle de direction de consigne du volant du véhicule automobile.

Sur l'exemple de la situation routière représentée sur la figure 5, le zoom grossissant n'aura pas d'impact réel car aucune des images Im₁ et Im₂ ne sont représentatives de l'existence d'un danger. Les deux traitements menés en parallèle généreront dans ce cas deux consignes S_{com1} et S_{com2} probablement identiques ou similaires.

En revanche, pour l'exemple de situation routière représentée sur la figure 6, la consigne additionnelle S_{com2} correspondra à une décélération de consigne dont la valeur sera beaucoup plus importante que pour la consigne S_{com1}, du fait que le dispositif 31b jugera que le véhicule tiers est beaucoup plus proche et qu'il faut freiner plus tôt.

Le système 3 conforme à l'invention comporte en outre un module numérique 33 de fusion connecté en sortie des dispositifs 31a et 31b de traitement et recevant en entrée les consignes S_{com1} et S_{com2}.

Le module numérique 33 de fusion est configuré pour générer une consigne résultante S_{com} de contrôle longitudinal fonction des consignes qu'il reçoit en entrée, ici fonction de la consigne S_{com1} issue du traitement de l'image Im₁ capturée, et de la consigne additionnelle S_{com2} issue du traitement de l'image Im₂. Différentes règles de fusion peuvent être appliquées à ce niveau de manière à correspondre à différents styles de conduite.

Par exemple, si la consigne S_{com1} correspond à une vitesse de consigne pour le véhicule automobile et la consigne additionnelle S_{com2} correspond chacune à une vitesse de consigne additionnelle pour le véhicule automobile, le module numérique 33 de fusion pourra générer :
- une consigne résultante S_{com} correspondant à la valeur minimum entre la vitesse de consigne et la vitesse de consigne additionnelle, pour un style de conduite dit « sécuritaire » ; ou
- une consigne résultante S_{com} correspondant à la valeur moyenne sur la vitesse de consigne et la vitesse de consigne additionnelle, pour un style de conduite dit « classique».

Une transformation géométrique autre que le zoom grossissant peut être envisagée sans départir du cadre de la présente invention. A titre d'exemple non limitatif, on peut notamment prévoir de configurer le module numérique 32 pour qu'il opère une rotation, un rognage ou une déformation de l'image Im₁ ou d'une zone d'intérêt de cette image Im₁.

Une transformation radiométrique, par exemple une modification de la luminosité ou du contraste, peut présenter également un intérêt dans l'amélioration de la réactivité de l'algorithme implémenté par les dispositifs 31a et 31b.

Bien entendu, tout ou partie de ces transformations peuvent être combinées pour produire une image transformée Im₂.

En variante, on peut prévoir que le système 3 comprenne plusieurs traitements additionnels menés en parallèle, chaque traitement comprenant une transformation prédéfinie de l'image capturée Im₁ en une deuxième image Im₂, et la génération, par un dispositif identique au dispositif 31a, d'une consigne associée. A titre d'exemples, on peut réaliser sur une même image Im₁ différents zooms à différentes échelles, ou des modifications de luminosité à différents degrés, ou plusieurs transformations de différentes natures.

L'intérêt de ces traitements parallèles est de pouvoir générer une pluralité de consignes possiblement différentes, à partir de transformations réalisées sur une même image, de façon à améliorer le comportement global de l'algorithme utilisé par le dispositif 31a.

Les règles de fusion appliquées à partir de cette pluralité de consignes peuvent être diverses selon que l'on privilégie la sécurité ou non. A titre d'exemple, le module numérique de fusion peut être configuré pour générer :
- une consigne résultante S_{com} correspondant à la valeur minimum entre les différentes vitesses de consigne issues des différents traitements, pour un style de conduite dit « sécuritaire » ; ou
- une consigne résultante S_{com} correspondant à la valeur moyenne les différentes vitesses de consigne issues des différents traitements, pour un style de conduite dit « classique» ; ou
- une consigne résultante S_{com} correspondant à valeur moyenne des deux plus grandes vitesses de consigne issues des différents traitements, pour un style de conduite dit « agressif».

## Revendications

1. Procédé d'assistance à la conduite pour le contrôle longitudinal et/ou latéral d'un véhicule automobile (1), le procédé comportant une étape de traitement d'une image (Im₁) capturée par une caméra (2) numérique embarquée sur ledit véhicule automobile (1) suivant un algorithme de traitement ayant été entraîné au préalable selon un algorithme d'apprentissage, de manière à générer une consigne (S_{com1}) de contrôle longitudinal et/ou latéral du véhicule automobile (1), le procédé étant **caractérisé en ce qu'**il comprend en outre :
- au moins une étape de traitement additionnel, en parallèle de ladite étape de traitement de l'image (Im₁), d'au moins une image additionnelle (Im₂) suivant ledit algorithme de traitement, de manière à générer au moins une consigne additionnelle (S_{com2}) de contrôle longitudinal et/ou latéral du véhicule automobile (1), ladite au moins une image additionnelle (Im₂) résultant d'au moins une transformation géométrique effectuée sur ladite image (Im₁) capturée, et
- la génération d'une consigne résultante (S_{com}) de contrôle longitudinal et/ou latéral fonction de ladite consigne (S_{com1}) de contrôle longitudinal et/ou latéral et de ladite au moins une consigne additionnelle (S_{com2}) de contrôle longitudinal et/ou latéral et **caractérisé en outre en ce que** ladite au moins une transformation géométrique comprend un zoom grossissant une zone d'intérêt de ladite image (Im₁) capturée.

2. Procédé selon l'une quelconque des revendications précédentes, **caractérisé en ce que** ladite au moins une transformation géométrique et/ou radiométrique comprend une rotation, ou une modification de la luminosité, ou un rognage de ladite image (Im₁) capturée ou d'une zone d'intérêt de ladite image (Im₁) capturée.

3. Procédé selon l'une quelconque des revendications précédentes, **caractérisé en ce que** ladite consigne (S_{com1}) de contrôle longitudinal et/ou latéral et ladite au moins une consigne additionnelle (S_{com2}) de contrôle longitudinal et/ou latéral comportent une information relative à un angle de direction de consigne du volant du véhicule automobile.

4. Procédé selon l'une quelconque des revendications précédentes, **caractérisé en ce que** ladite consigne (S_{com1}) de contrôle longitudinal et/ou latéral et ladite au moins une consigne (S_{com2}) additionnelle de contrôle longitudinal et/ou latéral comportent une information relative à une vitesse de consigne et/ou une accélération de consigne.

5. Procédé selon la revendication 4, **caractérisé en ce que** ladite consigne résultante (S_{com}) de contrôle longitudinal et/ou latéral est générée par calcul d'une moyenne de ladite consigne (S_{com1}) de contrôle longitudinal et/ou latéral et ladite au moins une consigne additionnelle (S_{com2}) de contrôle longitudinal et/ou latéral.

6. Procédé selon la revendication 4, **caractérisé en ce que** ladite consigne résultante (S_{com}) de contrôle longitudinal et/ou latéral correspond à une valeur minimum entre une vitesse de consigne relative à ladite consigne (S_{com1}) de contrôle longitudinal et/ou latéral et une vitesse de consigne additionnelle relative à ladite au moins une consigne additionnelle (S_{com2}) de contrôle longitudinal et/ou latéral.

7. Système (3) d'assistance à la conduite pour le contrôle longitudinal et/ou latéral d'un véhicule automobile (1), le système comportant un dispositif (31a) de traitement d'images destiné à être embarqué sur le véhicule automobile (1), ledit dispositif (31a) de traitement d'images ayant été entraîné au préalable selon un algorithme d'apprentissage et étant configuré pour générer en sortie une consigne (S_{com1}) de contrôle longitudinal et/ou latéral du véhicule automobile (1) à partir d'une image (Im₁) capturée par une caméra (2) numérique embarquée et fournie en entrée, le système (3) étant **caractérisé en ce qu'**il comprend en outre :
- au moins un dispositif (31b) additionnel de traitement d'images identique audit dispositif (31a) de traitement d'images ;
- un module numérique (32) de traitement d'images configuré pour fournir au moins une image additionnelle (Im₂) en entrée dudit dispositif (31b) additionnel de traitement d'images pour un traitement en parallèle de l'image (Im₁) capturée par la caméra (2) et de ladite au moins une image additionnelle (Im₂), de manière à ce que ledit dispositif (31b) additionnel de traitement d'images génère au moins une consigne additionnelle (S_{com2}) de contrôle longitudinal et/ou latéral du véhicule automobile (1), ladite au moins une image additionnelle (Im₂) résultant d'au moins une transformation géométrique effectuée sur ladite image (Im₁), et
- un module numérique (33) de fusion configuré pour générer une consigne résultante (S_{com}) de contrôle longitudinal et/ou latéral fonction de ladite consigne (S_{com2}) de contrôle longitudinal et/ou latéral et de ladite au moins une consigne additionnelle (S_{com2}) de contrôle longitudinal et/ou latéral et **caractérisé en outre en ce que** ladite au moins une transformation géométrique comprend un zoom grossissant une zone d'intérêt de ladite image (Im₁) capturée.

8. Système selon la revendication 7, **caractérisé en ce que** ledit dispositif (31a) de traitement d'images et ledit dispositif (31b) additionnel de traitement d'images comportent un réseau neuronal profond.

## Patentansprüche

1. Fahrassistenzverfahren für die Längs- und oder Seitenkontrolle eines Kraftfahrzeugs (1), wobei das Verfahren einen Verarbeitungsschritt eines von einer Digitalkamera (2) an Bord des Kraftfahrzeugs (1) aufgenommenen Bilds (Im₁) gemäß einem Verarbeitungsalgorithmus aufweist, der vorher gemäß einem Lernalgorithmus angelernt wurde, um einen Sollwert (S_{com1}) der Längs- und/oder Seitenkontrolle des Kraftfahrzeugs (1) zu generieren, wobei das Verfahren **dadurch gekennzeichnet ist, dass** es außerdem enthält:
- mindestens einen zusätzlichen Verarbeitungsschritt, parallel zum Verarbeitungsschritt des Bilds (Im₁), mindestens eines zusätzlichen Bilds (Im₂) gemäß dem Verarbeitungsalgorithmus, um mindestens einen zusätzlichen Sollwert (S_{com2}) der Längs- und/oder Seitenkontrolle des Kraftfahrzeugs (1) zu generieren, wobei das mindestens eine zusätzliche Bild (Im₂) aus mindestens einer am aufgenommenen Bild (Im₁) ausgeführten geometrischen Transformation resultiert, und
- die Generierung eines resultierenden Sollwerts (S_{com}) der Längs- und/oder Seitenkontrolle abhängig vom Sollwert (S_{com1}) der Längs- und/oder Seitenkontrolle und vom mindestens einen zusätzlichen Sollwert (S_{com2}) der Längs- und/oder Seitenkontrolle, und außerdem **dadurch gekennzeichnet, dass** die mindestens eine geometrische Transformation einen Zoom enthält, der einen interessierenden Bereich des aufgenommenen Bilds (Im₁) vergrößert.

2. Verfahren nach einem der vorhergehenden Ansprüche, **dadurch gekennzeichnet, dass** die mindestens eine geometrische und/oder radiometrische Transformation eine Drehung oder eine Änderung der Helligkeit oder ein Beschneiden des aufgenommenen Bilds (Im₁) oder eines interessierenden Bereichs des aufgenommenen Bilds (Im₁) enthält.

3. Verfahren nach einem der vorhergehenden Ansprüche, **dadurch gekennzeichnet, dass** der Sollwert (Scom₁) der Längs- und/oder Seitenkontrolle und der mindestens eine zusätzliche Sollwert (S_{com2}) der Längs- und/oder Seitenkontrolle eine Information bezüglich eines Solllenkwinkels des Lenkrads des Kraftfahrzeugs aufweisen.

4. Verfahren nach einem der vorhergehenden Ansprüche, **dadurch gekennzeichnet, dass** der Sollwert (S_{com1}) der Längs- und/oder Seitenkontrolle und der mindestens eine zusätzliche Sollwert (S_{com2}) der Längs- und/oder Seitenkontrolle eine Information bezüglich einer Sollgeschwindigkeit und/oder einer Sollbeschleunigung aufweisen.

5. Verfahren nach Anspruch 4, **dadurch gekennzeichnet, dass** der resultierende Sollwert (S_{com}) der Längs- und/oder Seitenkontrolle durch Berechnung eines Mittelwerts des Sollwerts (S_{com1}) der Längs- und/oder Seitenkontrolle und des mindestens einen zusätzlichen Sollwerts (S_{com2}) der Längs- und/oder Seitenkontrolle generiert wird.

6. Verfahren nach Anspruch 4, **dadurch gekennzeichnet, dass** der resultierende Sollwert (S_{com}) der Längs- und/oder Seitenkontrolle einem minimalen Wert zwischen einer Sollgeschwindigkeit bezüglich des Sollwerts (S_{com1}) der Längs- und/oder Seitenkontrolle und einer zusätzlichen Sollgeschwindigkeit bezüglich des mindestens einen zusätzlichen Sollwerts (S_{com2}) der Längs- und/oder Seitenkontrolle entspricht.

7. Fahrassistenzsystem (3) für die Längs- und/oder Seitenkontrolle eines Kraftfahrzeugs (1), wobei das System eine Bildverarbeitungsvorrichtung (31a) aufweist, die dazu bestimmt ist, in das Kraftfahrzeug (1) eingebaut zu werden, wobei die Bildverarbeitungsvorrichtung (31a) vorab gemäß einem Lernalgorithmus angelernt wurde und konfiguriert ist, am Ausgang einen Sollwert (Scom₁) der Längs- und/oder Seitenkontrolle des Kraftfahrzeugs (1) ausgehend von einem durch eine eingebaute Digitalkamera (2) aufgenommenen und am Eingang gelieferten Bild (Im₁) zu generieren, wobei das System (3) **dadurch gekennzeichnet ist, dass** es außerdem enthält:
- mindestens eine zusätzliche Bildverarbeitungsvorrichtung (31b) gleich der Bildverarbeitungsvorrichtung (31a);
- ein digitales Bildverarbeitungsmodul (32), das konfiguriert ist, mindestens ein zusätzliches Bild (Im₂) am Eingang der zusätzlichen Bildverarbeitungsvorrichtung (31b) für eine parallele Verarbeitung des von der Kamera (2) aufgenommenen Bilds (Im₁) und des mindestens einen zusätzlichen Bilds (Im₂) zu liefern, damit die zusätzliche Bildverarbeitungsvorrichtung (31b) mindestens einen zusätzlichen Sollwert (S_{com2}) der Längs- und/oder Seitenkontrolle des Kraftfahrzeugs (1) generiert, wobei das mindestens eine zusätzliche Bild (Im₂) aus mindestens einer am Bild (Im₁) ausgeführten geometrischen Transformation resultiert, und
- ein digitales Fusionsmodul (33), das konfiguriert ist, einen resultierenden Sollwert (S_{com}) der Längsund/oder Seitenkontrolle abhängig vom Sollwert (S_{com2}) der Längs- und/oder Seitenkontrolle und vom mindestens einen zusätzlichen Sollwert (S_{com2}) der Längs- und/oder Seitenkontrolle zu generieren und außerdem **dadurch gekennzeichnet ist, dass** die mindestens eine geometrische Transformation einen Zoom enthält, der einen interessierenden Bereich des aufgenommenen Bilds (Im₁) vergrößert.

8. System nach Anspruch 7, **dadurch gekennzeichnet, dass** die Bildverarbeitungsvorrichtung (31a) und die zusätzliche Bildverarbeitungsvorrichtung (31b) ein tiefes neuronales Netzwerk aufweisen.

## Claims

1. Driving assistance method for longitudinal and/or lateral control of a motor vehicle (1), the method comprising a step of processing an image (Im₁) captured by a digital camera (2) housed on board said motor vehicle (1) using a processing algorithm that has been trained beforehand by a learning algorithm, so as to generate a longitudinal and/or lateral control instruction (S_{com1}) for the motor vehicle (1), the method being **characterized in that** it furthermore comprises:
- at least one additional processing step, in parallel with said step of processing the image (Im₁), of additionally processing at least one additional image (Im₂) using said processing algorithm, so as to generate at least one additional longitudinal and/or lateral control instruction (S_{com2}) for the motor vehicle (1), said at least one additional image (Im₂) resulting from at least one geometric transformation performed on said captured image (Im₁), and
- generating a resultant longitudinal and/or lateral control instruction (S_{com}) on the basis of said longitudinal and/or lateral control instruction (S_{com1}) and of said at least one additional longitudinal and/or lateral control instruction (S_{com2}),
and furthermore **characterized in that** said at least one geometric transformation comprises zooming so as to magnify a region of interest of said captured image (Im₁) .

2. Method according to any one of the preceding claims, **characterized in that** said at least one geometric and/or radiometric transformation comprises rotating, or modifying the brightness of, or cropping said captured image (Im₁) or a region of interest of said captured image (Im₁) .

3. Method according to either one of the preceding claims, **characterized in that** said longitudinal and/or lateral control instruction (S_{com1}) and said at least one additional longitudinal and/or lateral control instruction (S_{com2}) comprise information relating to a setpoint steering angle of the steering wheel of the motor vehicle.

4. Method according to any one of the preceding claims, **characterized in that** said longitudinal and/or lateral control instruction (S_{com1}) and said at least one additional longitudinal and/or lateral control instruction (S_{com2}) comprise information relating to a setpoint speed and/or a setpoint acceleration.

5. Method according to Claim 4, **characterized in that** said resultant longitudinal and/or lateral control instruction (S_{com}) is generated by calculating an average of said longitudinal and/or lateral control instruction (S_{com1}) and of said at least one additional longitudinal and/or lateral control instruction (S_{com2}) .

6. Method according to Claim 4, **characterized in that** said resultant longitudinal and/or lateral control instruction (S_{com}) corresponds to a minimum value out of a setpoint speed in relation to said longitudinal and/or lateral control instruction (S_{com1}) and an additional setpoint speed in relation to said at least one additional longitudinal and/or lateral control instruction (S_{com2}).

7. Driving assistance system (3) for longitudinal and/or lateral control of a motor vehicle (1), the system comprising an image-processing device (31a) intended to be housed on board the motor vehicle (1), said image-processing device (31a) having been trained beforehand using a learning algorithm and being configured so as to generate, as output, a longitudinal and/or lateral control instruction (S_{com1}) for the motor vehicle (1) from an image (Im₁) captured by an on-board digital camera (2) and provided as input, the system (3) being **characterized in that** it furthermore comprises:
- at least one additional image-processing device (31b) identical to said image-processing device (31a);
- a digital image processing module (32) configured to input at least one additional image (Im₂) into said additional image-processing device (31b) for parallel processing of the image (Im₁) captured by the camera (2) and said at least one additional image (Im₂), such that said additional image-processing device (31b) generates at least one additional longitudinal and/or lateral control instruction (S_{com2}) for the motor vehicle (1), said at least one additional image (Im₂) resulting from at least one geometric transformation performed on said image (Im₁), and
- a digital fusion module (33) configured so as to generate a resultant longitudinal and/or lateral control instruction (S_{com}) on the basis of said longitudinal and/or lateral control instruction (S_{com2}) and of said at least one additional longitudinal and/or lateral control instruction (S_{com2}),
and furthermore **characterized in that** said at least one geometric transformation comprises zooming so as to magnify a region of interest of said captured image (Im₁) .

8. System according to Claim 7, **characterized in that** said image-processing device (31a) and said additional image-processing device (31b) comprise a deep neural network.
